# EUROPEAN PATENT APPLICATION

(11) **EP 2 431 211 A1**
(43) Date of publication of application: **21.03.2012**
(21) Application number: 09844614.9
(22) Date of filing: 13.05.2009
(51) Int. Cl.: B60L 3/04, B60K 6/445, B60W 10/08, B60W 10/26, B60W 20/00, H02M 3/155, H02M 7/5387

(54) **VEHICLE POWER CONVERSION DEVICE AND VEHICLE IN WHICH SAME IS INSTALLED**

(71) Applicant: Toyota Jidosha Kabushiki Kaisha, Toyota-shi, Aichi 471-8571 (JP)
(72) Inventor: OMIYA, Yuji, Toyota-shi Aichi 471-8571 (JP); KUNO, Hiromichi, Toyota-shi Aichi 471-8571 (JP)
(74) Representative: Intès, Didier Gérard André
(86) International application number: PCT/JP2009/058898
(87) International publication number: WO 2010/131340

(57) **Abstract**

In the event of collision of a vehicle (100), a control device (300) for a power converting apparatus (200) in the vehicle (100) is supplied with a power source voltage for operations thereof, using electric power resulting from residual charges accumulated in smoothing capacitors (C1, C2) provided in the power converting apparatus (200). With such a configuration, even if a power source voltage for the control device (300) is not supplied from outside the power converting apparatus (200) due to disconnection of a line, the residual charges accumulated in the smoothing capacitor (C1, C2) provided in the power converting apparatus (200) can be discharged.

## Description

### TECHNICAL FIELD

The present invention relates to a power converting for a vehicle as well as a vehicle including the power converting apparatus, more particularly, to supply of power to a control device, which controls the power converting apparatus, when discharging residual charges in a capacitor in the power converting apparatus in the event of collision of the vehicle.

### BACKGROUND ART

In recent years, electrically powdered vehicles have been drawing attention as environmentally friendly vehicles. Each of such environmentally friendly vehicles has a power storage device (such as a secondary battery or a capacitor) mounted thereon and travels using driving power produced from electric power stored in the power storage device. Examples of such electrically powdered vehicles include electric vehicles, hybrid vehicles, fuel cell vehicles, and the like.

Each of the electrically powered vehicles may include a motor generator for generating driving power to travel using electric power received from the power storage device upon departure or acceleration, and for generating electric power upon braking by means of regenerative braking to store electrical energy in the power storage device. In order to control such a motor generator in accordance with a traveling state, the electrically powdered vehicle is provided with a power converting apparatus for converting electric power by means of a converter, an inverter, or the like.

Such a power converting apparatus is provided with a smoothing capacitor having a large capacitance to stabilize direct-current power supplied thereto. During operations of the power converting apparatus, electric charges corresponding to applied voltage are accumulated in the smoothing capacitor.

In the event of collision of the vehicle, the electric charges accumulated and remaining in the smoothing capacitor need to be discharged immediately.

Japanese Patent Laying-Open No. 2004-201439 (PTL 1) describes a technique for consuming residual charges accumulated in smoothing capacitors, which are respectively provided at the input side and output side of a converter capable of performing step-up and step-down operations in a voltage converting system. The residual charges are consumed by controlling the converter to perform the step-up operation and the step-down operation alternately upon stop of supply of direct-current power.

### CITATION LIST

### PATENT LITERATURE

PLT 1: Japanese Patent Laying-Open No. 2004-201439
PLT 2: Japanese Patent Laying-Open No. 2008-006996
PLT 3: Japanese Patent Laying-Open No. 2008-061300
PLT 4: Japanese Patent Laying-Open No. 2004-023926

### SUMMERY OF INVENTION

### TECHNICAL PROBLEM

The technique disclosed in Japanese Patent Laying-Open No. 2004-201439 (PTL 1) assumes a case where the supply of electric power from the power storage device is stopped by turning off an ignition key, i.e., a case of stopping the electric power supply in a normal state. Hence, electric power is normally supplied from the power storage device to the control device for controlling the power converting apparatus.

In the event of collision or the like of the vehicle, the residual charges in the smoothing capacitors need to be consumed immediately. However, the collision of the vehicle may result in disconnection of a power source line used to supply electric power to operate the control device. In such a case, in Japanese Patent Laying-Open No. 2004-201439 (PTL 1), the control device cannot control the converter normally. Accordingly, the residual charges cannot be consumed, disadvantageously.

Meanwhile, Japanese Patent Laying-Open No. 2008-006996 (PTL 2) discloses a technique in which a separate capacitor is provided as a back-up power source for such a control device. However, in this case, the capacitor thus serving as a back-up power source needs to be capable of handling input voltages of a wide range (for example, 30 V to 300 V). This results in complicated designing of components, which may lead to increased cost.

The present invention is made to solve the foregoing problem and has its objet to discharge residual charges accumulated in a smoothing capacitor provided in a power converting apparatus of a vehicle in the event of collision of the vehicle. The residual charges are discharged by using electric power resulting from the accumulated residual charges so as to supply a power source voltage to operate a control device for the power converting apparatus.

### SOLUTION TO PROBLEM

A power converting apparatus in the present invention is for a vehicle including: a first power storage device for supplying direct-current power to the power converting apparatus; a relay configured to be capable of switching between supply interruption of the direct-current power to the power converting apparatus; and a collision detecting unit for detecting collision of the vehicle. The power converting apparatus includes a capacitor, a power converting unit, a control device, and a power supply unit. The power converting unit is configured to include a switching element and convert the power supplied from the first power storage device via the relay. The control device controls the power converting unit by controlling the switching element, so as to consume a residual charge in the capacitor. The power supply unit supplies the control device with a power source voltage using power accumulated in the capacitor, when the collision of the vehicle is detected and the residual charge is consumed with the first power storage device being electrically separated from the power converting apparatus by the relay.

Preferably, the power supply unit includes a first voltage converter for stepping down a voltage of the power accumulated in the capacitor. When the collision of the vehicle is detected, the first voltage converter supplies the control device with the power source voltage.

More preferably, the power supply unit further includes a switch connected to a power source line and the control device and configured to be capable of switching between supply and interruption of the power source voltage from the first voltage converter to the control device, the power source line being supplied with the power stepped down by the first voltage converter. In response to the detection of the collision of the vehicle, the control device controls the switch to supply the power source voltage from the first voltage converter to the control device.

Morse preferably, the power supply unit further includes a second voltage converter for stepping up the power stepped down by the first voltage converter. When the collision of the vehicle is detected, the second voltage converter supplies the control device with the power source voltage.

Alternatively, preferably, the vehicle further includes a second power storage device. The first voltage converter is a step-down converter for charging the second power storage device.

Preferably, the power supply unit includes a first voltage converter for stepping down a voltage of the power accumulated in the capacitor. The first voltage converter includes a control unit, and a power source unit for generating a control power source voltage for operating the control unit. The power source unit generates the control power source voltage by converting the power accumulated in the capacitor, and when the collision of the vehicle is detected, the power supply unit supplies the control device with the control power source voltage.

More preferably, the power supply unit further includes a second voltage converter for stepping up the control power source voltage, the second voltage converted being collected to a power source line supplied with the control power source voltage from the power source unit. When the collision of the vehicle is detected, the second voltage converter supplies the control device with the power source voltage.

Preferably, the power converting unit includes: a third voltage converter configured to perform voltage conversion of the direct-current power supplied from the first power storage device; and an inverter 120 for converting the direct-current power supplied from the third voltage converter (110), into alternating-current power. The capacitor includes: a first capacitor connected to the third voltage converter at the first power storage device side; and a second capacitor connected to the third voltage converter at the inverter side.

More preferably, the third voltage converter is capable of performing a step-up operation and a step-down operation, the step-up operation allows for consumption of a part of the residual charge in the first capacitor, and the step-down operation allows for consumption of a part of the residual charge in the second capacitor.

More preferably, the control device controls the third voltage converter to repeat the step-up operation and the step-down operation alternately.

A vehicle in the present invention includes a power converting apparatus, a first power storage device, a relay, and a collision detecting unit. The power converting apparatus includes a capacitor, a power converting unit, a control device, and a power supply unit. The first power storage device supplies direct-current power to the powder converting apparatus. The relay is configured to be capable of switching supply and interruption of the direct-current power to the power converting apparatus. The collision detecting unit detects collision of the vehicle. The power converting unit is configured to to have a switching element and the power supplied from the first power storage device via the relay. The control device controls the power converting unit by controlling the switching element, so as to consume a residual charge in the capacitor. The power supply unit supplies the control device with a power source voltage using power accumulated in the capacitor, when the collision of the vehicle is detected and the residual charge is consumed with the first power storage device being electrically separated from the power converting apparatus by the relay.

Preferably, the power supply unit includes a first voltage converter for stepping down a voltage of the power accumulated in the capacitor. When the collision of the vehicle is detected, the first voltage converter supplies the control device with the powder source voltage.

Morse preferably, the power supply unit further includes a switch connected to a power source line and the control device and configured to be capable of switching between supply and interruption of the power source voltage from the first voltage converter to the control device, the power source line being supplied with the powder stepped drown by the first voltage converter. In response to the detection of the collision of the vehicle, the control device controls the switch to supply the powder source voltage from the first voltage converter to the control device.

Alternatively, preferably, the power supply unit further includes a second voltage converter for stepping up the power stepped down by the first voltage converter. When the collision of the vehicle is detected, the second voltage converter supplies the control device with the power source voltage.

Preferably, the power supply unit includes a first voltage converter for stepping down a voltage of the power accumulated in the capacitor. The first voltage converter has a control unit, and a power source unit for generating a control power source voltage for operating the control unit. Further, the power source unit generates the control power source voltage by converting the power accumulated in the capacitor. The power supply unit further includes a second voltage converter for stepping up the control power source voltage to supply the control device with the power source voltage when the collision of the vehicle is detected.

### ADVANTAGEOUS EFFECTS OF INVENTION

According two the present invention, in the power converting apparatus of the vehicle, in the event of collision of the vehicle, the power ;source voltage for operating the control device for controlling the power converting apparatus is supplied using the electric power resulting from the residual charge accumulated in the smoothing capacitor of the power converting apparatus. In this way, the residual charge accumulated in the smoothing capacitor in the power converting apparatus can be discharged.

### BRIEF DESCRIPTION OF DRAWILNGS

Fig. 1 is a general block diagram of a vehicle according to a first embodiment.
Fig. 2 is a schematic diagram showing inside of an ECU in the first embodiment.
Fig. 3 is a flowchart for illustrating a residual charge discharging control process performed by the ECU in the first embodiment.
Fig. 4 is a general block diagram of a vehicle according to a variation of the first embodiment.
Fig. 5 is a first diagram showing outlive of stabilization of a control power source voltage in a embodiment.
Fig. 6 is a second diagram showing the outlive of stabilization of the control power source voltage in the second embodiment.
Fig. 7 is a general block diagram of a vehicle in the second embodiment.
Fig. 8 shows an exemplary configuration of a step-up converter in the second embodiment.
Fig. 9 is a time chart for illustrating the residual charge discharging control in the second embodiment.
Fig. 10 is a flowchart for illustrating the residual charge discharging control process performed by the ECU in the second embodiment.
Fig. 11 is a general block diagram of a vehicle in which the variation of the first embodiment is applied to the second embodiment.

### DESCRIPTION OF EMBODIMENTS

The following describes embodiments of the present invention in detail with reference to figures. It should be noted that the same or corresponding portions in the figures are given the same reference characters and are not described repeatedly.

### [First Embodiment]

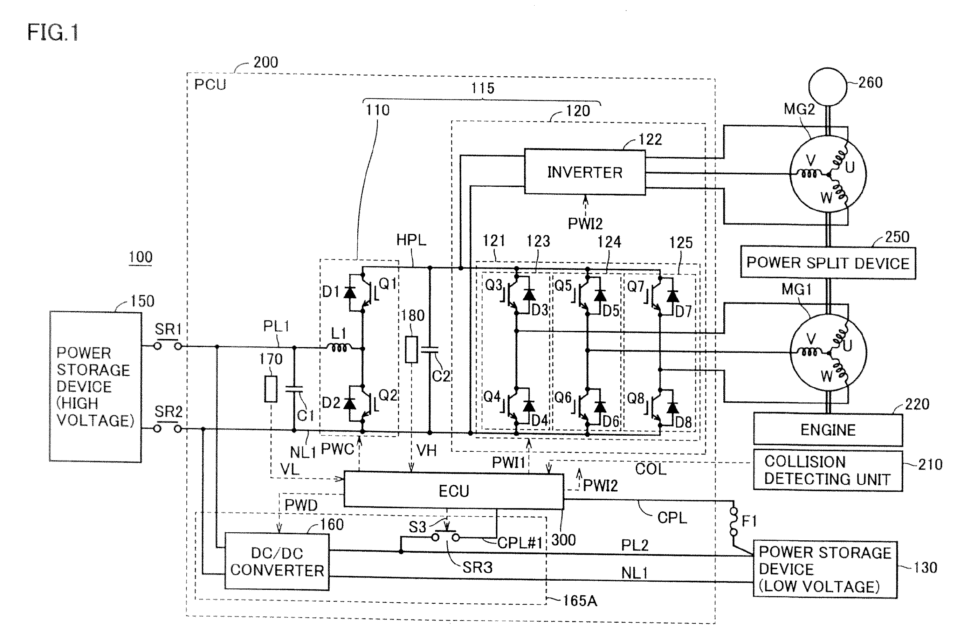

Fig. 1 shows a general block diagram of a vehicle 100 according to a first embodiment. In the first embodiment, vehicle 100 is illustrated as a hybrid vehicle including an engine and motor generators, but the configuration of vehicle 100 is not limited to this. The present invention is applicable to any vehicle capable of traveling using electric power supplied from a power storage device. Examples of vehicle 100 include an electric vehicle, a fuel cell vehicle, and the like in addition to the hybrid vehicle. Moreover, the present invention is also applicable to a vehicle including a power converting apparatus but not capable of traveling using electric power supplied from a power storage device,

Referring to Fig. 1, vehicle 100 includes: power storage devices 130, 150; a power converting apparatus (hereinafter, also referred to as "PCU" (Power Control Unit)) 200; motor generators MG1, MG2; a power split device 250; an engine 220; driving wheels 260: a collision detecting unit 210; and relays SR1, SR2.

Each of power storage devices 130, 150 is a stationery energy storage element configured to be chargeable/dischargeable. For example, each of power stowage devices 130, 150 is a secondary battery or a power storage element. An example of the secondary battery is a lithium ion battery, a nickel-hydrogen battery, or a lead storage battery. An example of the power storage element is an electric double layer capacitor.

Power storage device 150 is connected to PCU 200 by a power source line PL1 and a ground line NL1 via relays SR1, SR2. Power device 150 supplies PCU 200 with direct-current power for driving motor generators MG1, MG2. Further, power storage device 150 stores electric power generated by motor generators MG1, MG2 and supplied via PCU 200. The electric power supplied from power storage device 150 has a voltage (for example, 200 V) relatively higher than that of electric power supplied from power stowage device 130.

Power storage device 130 supplies a power source voltage for operating an auxiliary device, a control device, or the like. The electric power supplied from powder storage device 130 has a voltage (for example, 14 V) relatively lower than that of the electric power supplied from power storage device 150. Further, power storage device 130 is charged by the electric power, which is supplied from power stowage device 150 and is stepped drown by a DC/DC converter 160 (described below) provided in PCU 200. Further, power storage device 130 supplies, via a fuse F1 and a control power source line CPL, a control power source voltage for operating a below-described control device (hereinafter, also referred to as "ECU" (Electronic Control Unit)) 300 provided in PCU 200.

Relays SR1, SR2 are respectively inserted in power source line PL1 and ground line NL1, each of which connects power storage device 150 and PCU 200 to each other. Each of relays SR1, SR2 switches between supply and interruption of the electric power from power storage device 150 to PCU 200.

PCU 200 converts the direct-current power supplied from power storage device 150 into alternating-current power, and supplies it to motor generators MG1, MG2. Further, PCU 200 converts alternating-current power generated by each of motor generators MG1, MG2 into direct-current power, and charges power storage device 150 with it.

When receiving the alternating-current power from PCU 200, each of motor generators MG1, MG2 generates rotational driving power for driving the vehicles. On the other hand, each of motor generators MG1, MG2 generates alternating-current power when receiving rotational power from outside, and generates regenerative braking power in vehicle 100 in accordance with a regenerative torque command sent from ECU 300.

Further, motor generators MG1, MG2 are coupled to engine 220 via power split device 250. Deriving power generated by engine 220 and driving power generated by each of motor generators MG1, MG2 are controlled to be in an optimum ratio. Further, one of motor generators MG1. MG2 may serve only as an electric motor, and the ether may serve only as an electric power generator. It is assumed in the first embodiment that motor generator MG1 serves an electric power generator driven by engine 220 and motor generator MG2 serves as an electric motor for driving driving wheels 260.

For power split device 250, a planetary gear mechanism (planetary gear) is used to distribute motive power, provided by engine 220, to driving wheels 260 and motor generator MG1.

Collision detecting unit 210 includes a sensor (for example, G sensor) not shown in the figure, and determines whether or not vehicle 100 has collided. Then, collision detecting unit 210 outputs a result of the detection to ECU 300 provided in PCU 200.

PCU 200 includes a power converting unit 115, smoothing capacitors C1, C2, voltage sensors 170, 180, a power supply unit 165A, and ECU 300. Power supply unit 165A includes DC/DC converter 160 and a relay SR3. Power converting unit 115 includes converter 110 and inverter 120. Further, inverter 120 includes: an inverter 121 for driving motor generator MG1; and an inverter 122 for driving motor generator MG2.

Converter 110 includes: a reactor L1 having one end connected to power source line PL1; semiconductor switching elements Q1, Q2 connected in series between a power source line HPL and ground line NL1; and diodes D1, D2 respectively connected to semiconductor switching elements Q1, Q2 in parallel.

Reactor L1 has the other end collected to the emitter of semiconductor switching element Q1 and the collector of semiconductor switching element Q2.

Diode D1 has a cathode connected to the collector of semiconductor switching element Q1, and has an anode connected to the emitter of semiconductor switching element Q1. Diode D2 has a cathode connected to the collector of semiconductor switching element Q2, and has an anode connected to the emitter of semiconductor switching element Q2.

inverter 121 receives a stepped-up voltage from converter 110 so as to drive motor generator MG1 for starting up engine 220, for example. Further, inverter 121 supplies converter 110 with regenerative power generated by motor generator MG1 using mechanical motive power transmitted from engine 220. On this occasion, converter 110 is controller by ECU 300 to operate as a step-down circuit.

Inverter 121 includes a U-phase arum 123, a V-phase arm 124, and a W-phase are 125. U-phase arm 123, V-phase arm 124, and W-phase arm 125 are connected in parallel between power source line HPL and ground line NL1.

U-phase arm 123 includes: semiconductor switching elements Q3, Q4 connected in series between power source line HPL and ground line NL1; and diodes D3, D4 respectively collected to semiconductor switching elements Q3, Q4 in parallel. Diode D3 has a cathode connected to the collector of semiconductor switching element Q3, and has an anode connected to the emitter of semiconductor switching element Q3. Diode D4 has a cathode connected to the collector of semiconductor switching element Q4, and has an anode connected to the emitter of semiconductor switching element Q4.

V-phase arm 124 includes: semiconductor switching elements Q5, Q6 connected in series between power source line HPL and ground line NL1; and diodes D5, D6 respectively connected to semiconductor switching elements Q5, Q6 in parallel. Diode D5 has a cathode connected to the collector of semiconductor switching element Q5, and has an anode connected to the emitter of semiconductor switching element Q5. Diode D6 has a cathode connected to the collector of semiconductor switching element Q6, and has an anode connected to the emitter of semiconductor switching element Q6.

W-phase arm 125 includes: semiconductor switching elements Q7, Q8 connected in series between power source line HPL and ground line NL1; and diodes D7, D8 respectively connected to semiconductor switching elements Q7, Q8 in parallel. Diode D7 has a cathode connected to the collector of semiconductor switching element Q7, and has an anode connected to the emitter of semiconductor switching element Q7. Diode D8 has a cathode connected to the collector of semiconductor switching element Q8, and has an anode connected to the emitter of semiconductor switching element Q8.

Motor generator MG1 is, for example, a three-phase alternating-current motor generator including a rotor having a permanent magnet embedded therein and a stator having three-phase coils connected to one another at a neutral point in the form of Y connection. Each of the three coils of U, V, and W phases has one end connected to the neutral point. The ether end of the U-phase coil is connected to the connection node of semiconductor switching elements Q3, Q4. The other end of the V-phase coil is connected to the convection node of semiconductor switching elements Q5, Q6. The other end of the W-phase coil is connected to the connection node of semiconductor switching elements Q7, Q8.

Inverter 121 turns on or off a gate signal of each of semiconductor switching elements Q3-Q8 in accordance with a driving commend PWI1 sent from ECU 300, thereby converting the direct-current power supplied from converter 110 into desired alternating-current power.

Inverter 122 is connected to converted 110 in parallel with inverter 121.

Inverter 122 converts a direct-current voltage output by converter 110 into a three-phase alternating-current voltage and sends it to motor generator MG2 to drive driving wheels 260. Further, in response to regenerative braking, inverter 122 sends, to converter 110, regenerative power generated by motor generator MG2. In doing so, converter 110 is controlled by ECU 300 to operate as a step-down circuit. Although an internal configuration of inverter 122 is not described in the figure, the internal configuration is similar to that of inverter 121 and is therefore not described in detail repeatedly.

Smoothing capacitor C1 is connected between power source line PL1 at the low-voltage side of converter 110 (i.e., the power storage device 150 side) and ground line NL1, and absorbs a ripple voltage upon switching of semiconductor switching elements Q1, Q2. Smoothing capacitor C2 is connected between power source line HPL1 at the high-voltage side of converter 110 (i.e., the inverter 120 side) and ground line NL1, and absorbs a ripple voltage generated in each of converter 110 and inverter 120 upon switching.

Voltage sensor 170 detects a voltage VL across smoothing capacitor C1, and sends an indication of the detected voltage VL to ECU 300. Further, voltage sensor 180 detects a voltage VH across smoothing capacitor C2, i.e., output voltage of converter 110 (corresponding to an input voltage of inverter 120), and sends an indication of the detected voltage VL to ECU 300.

Further, converter 110 consumes residual charges in smoothing capacitor C1 through the step-up operation, and consumes residual charges in smoothing capacitor C2 through the step-down operation.

DC/DC converter 160 is connected to power source line PL1 and ground line NL1, and receives direct-current power supplied from power storage device 150 or converter 110. Further, DC/DC converter 160 is controlled in accordance with a control signal PWD from ECU 300, to step down the direct-current power thus received. Further, DC/DC converter 160 sends the stepped-down direct-current power to power storage device 130 via a power source line PL2 and a ground line NL2, thereby charging power storage device 130.

Relay SR3 has one end connected to power source line PL2, and has the other end connected to ECU 300. When relay SR3 is controlled in accordance with a control signal S3 from ECU 300 to close its contact point, electric power from power source line PL2 is supplied via a control power source line CPL#1 to provide ECU 300 with a control power source voltage.

From voltage sensors 170, 180, ECU 300 receives the respective vindications of voltage VL, VH of smoothing capacitor C1 and smoothing capacitor C2. Also from collision detecting unit 210, ECU 300 receives a collision signal COL for vehicle 100.

ECU 300 controls semiconductor switching elements Q1 , Q2 of converter 110 by means of a control signal PWC, to cause converter 110 to perform the step-up operation or the step-down operation.

Further, ECU 300 controls the semiconductor switching elements of inverters 121, 122 by means of control signals PWI1, PWI2 respectively, thereby allowing inverters 121, 122 to convert direct-current power supplied from converter 110 into alternating-current power.

Further, ECU 300 controls DC/DC converter 160 in accordance with control signal PWD, to further step down the direct-current power obtained through the step-down operation performed by converter 110 or the direct-current power supplied by power storage device 150, thereby charging power storage device 130.

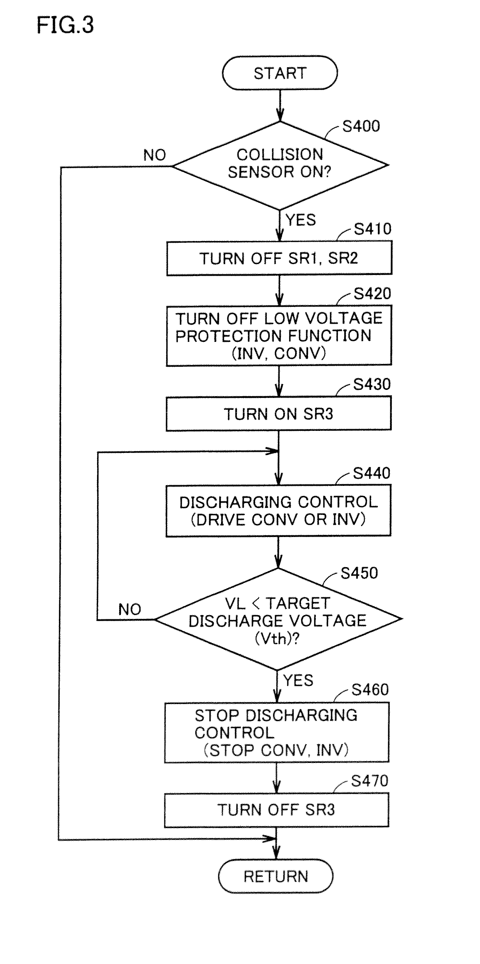

Further, when collision of vehicle 100 is detected from collision signal COL supplied from collision detecting unit 210, ECU 300 controls relay SR3 by means of control signal S3 to close its contact point. Accordingly, electric power in power source line PL2 is supplied to provide ECU 300 with the control power source voltage. Then, ECU 300 controls at least one of converter 110 and inverter 120 to consume the residual charges accumulated in smoothing capacitors C1, C2. Details thereof will be described later with reference to Fig. 3.

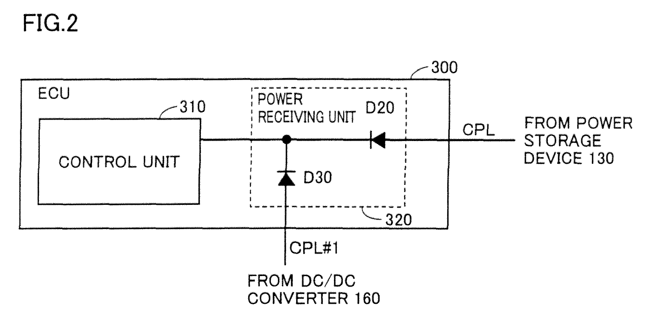

Fig. 2 shows a schematic diagram of inside of ECU 300. Referring to Fig. 2, ECU 300 includes a control unit 310 and a power receiving unit 320.

Although not shown in the figure, control unit 310 includes a CPU (Central Processing Unit), a memory device, and an input/output buffer, and controls power converting unit 115 and power supply unit 165A in PCU 200. It should be noted that they can be controlled by not only processing performed by software but also processing performed by dedicated hardware (electronic circuit) constructed therefor.

Power receiving unit 320 includes diodes D20. D30. Power receiving unit 320 receives a control power source voltage from power storage device 130 via control power source line CPL, and sends it to control unit 310 via diode D20. Further,power receiving unit 320 receives a control power source voltage from power source line PL2 via relay SR3 and control power source line CPL#1, and sends it to control unit 310 via diode D30. By configuring power receiving unit 320 to be such a circuit, the control power source voltage for operating ECU 300 can be supplied thereto by means of at least one of the output power from power storage device 130 and the output power from DC/DC converter 160.

In the case where driving power for driving the vehicle is generated using electric power supplied from a power storage device as in an electrically powered vehicle, each of the motor generators needs to be of relatively high power. Accordingly, the power converting apparatus including the inverter, the converter, and the like for controlling the motor generators may be provided with capacitors each having a high voltage and a large capacitance.

Hence, in particular, in the event of collision or the like of the vehicle, residual charges therein need to be discharged as quickly as possibly.

However, in the case where the control power source voltage is supplied from outside of the power converting apparatus to the control device for controlling the power converting apparatus, the power source line for supplying the control power source voltage may be disconnected depending on a state of the collision. However, for safety reasons, residual charges in the capacitors needs to be discharged even in such a state.

In view of this, in the first embodiment, in the event of collision of vehicle 100, residual charge discharging control is performed in power converting apparatus 200 so as to discharge the residual charges in smoothing capacitors C1, C2 by utilizing electric power, resulting from the residual charges accumulated in smoothing capacitors C1, C2, to provide the control power source voltage to the control device (ECU) 300 for controlling power converting apparatus 200. In this way, even when power source line CPL extending from outside of power converting apparatus 200 is disconnected, control device (ECU) 300 in power converting apparatus 200 can be driven. Also, power converting apparatus 200 can be controlled, whereby converter 110 and inverter 120 are operated to discharge the residual charges accumulated in smoothing capacitors C1, C2. Further, by means of the residual charges in smoothing capacitors C1, C2. control device (ECU) 300 is supplied with the control power source voltage, thereby consuming the residual charges more quickly.

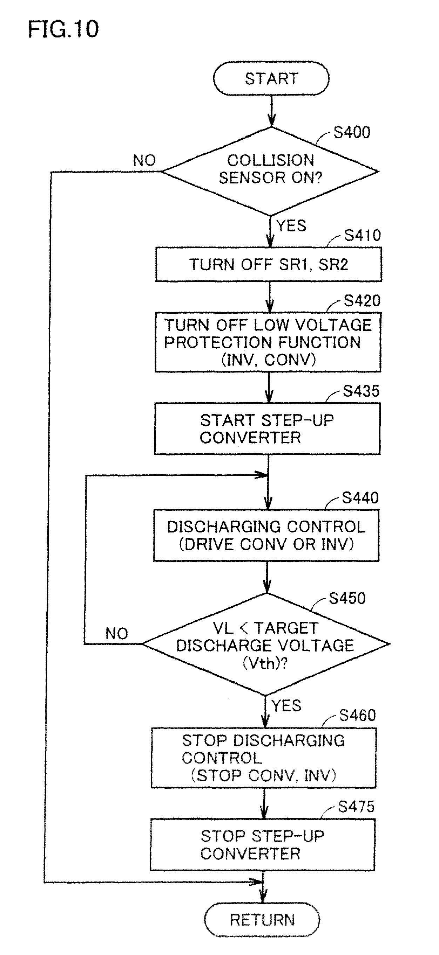

Fig. 3 shows a flowchart for illustrating the residual charge discharging control process performed by ECU 300 in the first embodiment. Each of processes in the flowcharts shown in Fig. 3 and Fig. 10 described below is implemented by invoking, from a main routine, a program stored in advance in ECU 300 and executing it at a predetermined cycle. Alternatively, part of steps in the processes can be implemented by dedicated hardware (electronic circuit) constructed therefor.

Referring to Fig. 1 and Fig. 3, in a step (hereinafter, the word "step" is abbreviated as "S") 400, ECU 300 determines whether or not vehicle 100 has collided, in accordance with collision signal COL sent from collision detecting unit 210.

When the vehicle has collided (YES in S400), the process proceeds to S410, in which ECU 300 turns off relays SR1, SR2 to interrupt electric power supplied from power storage device. 150. This is done because the electric charges in capacitors C1, C2 cannot be discharged if electric power continues to be supplied from power stowage device 150.

Next, in S420, ECU 300 makes settings to disable a "low-voltage protection function" of each of converter 110, DC/DC converter 160, and inverter 120 included in PCU 200 (hereinafter, collectively referred to as "power converting device").

Here, the term "low-voltage protection function" refers to a projection function generally provided in the power converting device to stop operations of the powder converting device when an input voltage of the power converting device is decreased. While the residual charges are being consumed in the course of the discharging operation of discharging the residual charges in smoothing capacitors C1, C2 in the manner of the first embodiment, the voltage of each of smoothing capacitors C1, C2 (i.e., input voltage of the power converting device) is gradually decreased. Hence, if this "low-voltage protection function" is enabled, the power conversion operation is not performed because the "low-voltage protection function" is performed when the input voltage becomes equal to or smaller than a predetermined reference voltage. Accordingly, the residual charges in smoothing capacitor C1 C2 are not consumed subsequently. In view of this, in the residual charge discharging control, ECU 300 makes settings to disable the "low-voltage protection function" in order to consume the residual charges in smoothing capacitors C1, C2 to a desired level.

Then, in S430, ECU 300 turns on control signal S3 to close the contract point of relay SR3. Accordingly, ECU 300 is supplied with the control power source voltage from power source line PL2 fed with electric power stepped down by DC/DC converter 160 (i.e., power source line PL2 at the output side). In this way, even if control power source line CPL, which is a normal supply path for the control power source voltage, is disconnected by collision, ECU 300 is supplied with the control power source voltage by means of electric power obtained by DC/DC converter 160 stepping down the electric power resulting from the residual charges accumulated in smoothing capacitor C1.

It should be noted that power source line PL2 and ground line NL2, which connect DC/DC converter 160 and power storage device 130 to each other, are formed of thick wires because large currents flow therein. Accordingly, they are less likely to be disconnected. Hence, when power source line PL2 and ground line NL2 are not disconnected, electric power can be supplied from power storage device 130 to ECU 300 via relay SR3. Further, when the residual charges in smoothing capacitors C1, C2 are consumed to decrease voltage VL, ECU 300 is backed up by electric power supplied from power storage device 130, thereby allowing ECU 300 to stably operate.

Further, in S440, ECU 300 performs control to discharge the residual charges in smoothing capacitors C1, C2. Specifically, ECU 300 outputs control signal PWC to cause converter 110 to repeatedly perform the step-up operation and the step-drown operation between smoothing capacitor C1 and smoothing capacitor C2. With this, due to energy loss (such as copper loss) caused by reactor L1 and switching loss of semiconductor switching elements Q1, Q2, the residual charges in smoothing capacitor C 1 are consumed during the step-up operation and the residual charges in smoothing capacitor C2 are consumed during the step-down operation.

Further, when each of the wires connected to motor generators MG1, MG2 is not disconnected, ECU 300 can cause inverter 120 to drive to consume the residual charges. For example, ECU 300 outputs control signals PWII, PWI2 so as to cause each of motor generators MG1, MG2 to output a field current component (d axial component), thereby consuming the residual charges without rotating motor generators MG1, MG2. It should be noted that whether or not each of the wires connected to motor generators MG1, MG2 is disconnected can be detected by, for example, detecting impedance, etc., of each of motor generators MG1, MG2 using a sensor not shown in figures.

Next, ECU 300 determines in S450 whether voltage VL of smoothing capacitor C1 is smaller than a predetermined target discharge voltage Vth, i.e., whether the discharging has been completed. This determination as to the completion oaf discharging may be determined in accordance with voltage VH of smoothing capacitor C2.

When voltage VL is equal to or greater than target discharge voltage Vth (NO in S450), the discharging has not been completed yet. Accordingly, the process is brought back to S440 to continue the discharging control.

On the other hand, when voltage VL is smaller than target discharge voltage Vth (YES in S450), ECU 300 stops the discharging control for converter 110 and inverter 120 in S460. Then, ECU 300 turns off control signal S3 in S470, thereby opening the contract point of relay SR3. Then, the process is brought back to the main routine.

Meanwhile, when the vehicle has not collided (NO in S400), the residual charge discharging control is not performed and S420-S470 are skipped to bring the process back to the main routine.

By controlling in accordance with the above-described process, ECU 300 is supplied with the control power source voltage using the electric power resulting from the residual charges accumulated in smoothing capacitor C1 within PCU 200, when discharging the residual charges in smoothing capacitors C1, C2 in response to collision of vehicle 100. In this way, even if control power source line CPL extending to ECU 300 from outside of PCU 200 is disconnected, the control power source voltage can be secured within PCU 200, thereby securely discharging the residual charges in smoothing capacitors C1, C2. Further, ECU 300 also consumes the electric power resulting from the residual charges in smoothing capacitors C1, C2, thereby consuming the residual charges more quickly.

### [Variation]

In the first embodiment, it has been illustrated that ECU 300 is supplied with the control power source voltage from power source line PL2 at the output side of DC/DC converter 160 in the event of collision of vehicle 100. However, in this case, if powder source line PL2 is grounded due to the collision of the vehicle, the control power source voltage cannot be supplied from DC/DC converter 160 to ECU 300.

To address this, the present variation illustrates an example of supplying a powder source voltage to ECU 300 using a control power source voltage generated within DC/DC converter 160 and independent of power source line PL2.

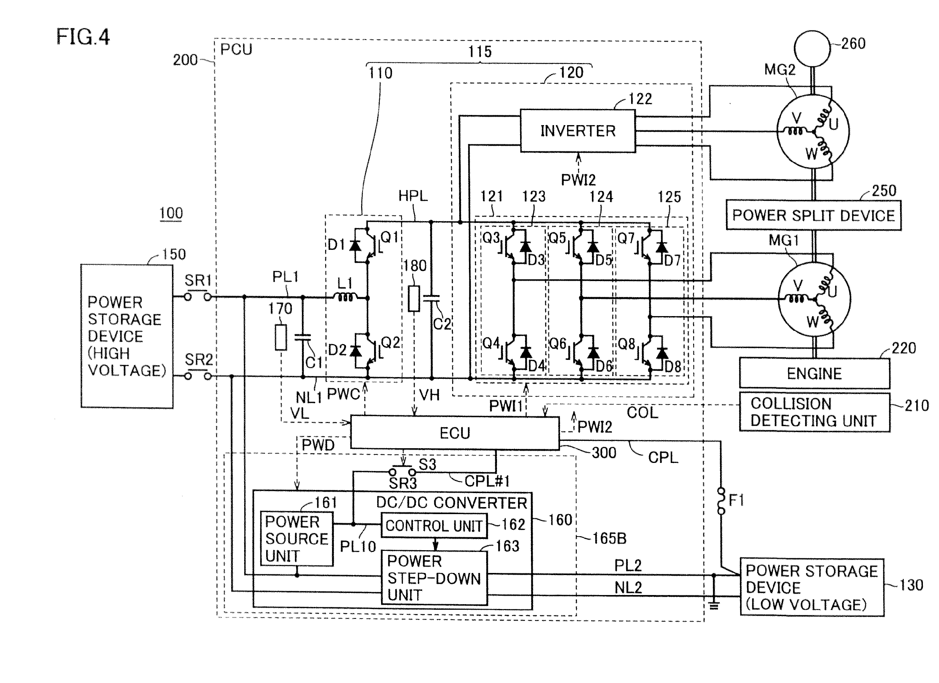

Fig. 4 shows a general block diagram, of a vehicle 100 according to the present variation. In Fig. 4, power supply unit 165A in the general block diagram of Fig. 1 is replaced with a power supply unit 165B. An internal configuration of DC/DC converted 160 in power supply unit 165B is illustrated therein. In addition, a location to which relay SR3 is connected is changed. In Fig. 4, portions/units corresponding to those in Fig. 1 are not described repeatedly.

Referring to Fig. 4, DC/DC converter 160 includes a power source unit 161, a control unit 162, and a power step-down unit 163.

Power source unit 161 steps down the voltage of electric power supplied from power source line PL1, so as to generate a power source voltage for control unit 162, which controls power step-down unit 163. The power source voltage thus generated by power source unit 161 is supplied to ECU 300 via relay SR3 and power source line PL10.

Control unit 162 receives the power source voltage from power source unit 161. Then, control unit 162 controls a semiconductor switching element (not shown) in power step-down unit 163, in accordance with control signal PWD from ECU 300.

Power step-down unit 163 includes the semiconductor switching element (not shown), and is controlled by control unit 162 to step drown the voltage in power source line PL1. Then, power step-down unit 163 outputs the stepped-down electric power to power source line PL2. For power step-down unit 163, there is employed a circuit including, for example, an insulated transformer (not shown) in order to prevent power source line PL1 from being grounded even when power source line PL2 is grounded, by insulating power source line PL1 at the input side and power source line PL2 at the output side from each other.

Even with such a circuit configuration, the residual charge discharging control can be implemented by ECU 300 controlling in accordance with the process illustrated in Fig. 3.

With the configuration above, DC/DC converter 160 has power step-down unit 163 having its insulated input and output; and power source unit 161 configured to generate, from power source line PL1, the control power source voltage for control unit 162 that controls power step-down unit 163. In addition, in the event of collision of vehicle 100, ECU 300 is supplied with the control power source voltage using the power source voltage output from power source unit 161. In this way, even when vehicle 100 has collides to ground power source line PL2 connecting DC/DC converter 160 and power storage device 130 to each other, ECU 300 can be supplied with the power source voltage using the electric power in smoothing capacitors C1, C2, thereby securely discharging the residual charges accumulated in smoothing capacitors C1, C2.

### [second Embodiment]

In the first embodiment and the variation, it has been illustrated that the electric power from DC/DC converted 160 is directly used as the control power source voltage for ECU 300.

In the first embodiment, if the supply of the power source voltage from power storage device 130 to ECU 300 is stopped due to disconnection of power source line PL2 and ground line NL2 connected to power storage device 130 as well as disconnection of control power source line CPL connected to ECU 300, voltage VL is decreased more as the residual charges in smoothing capacitors C1, C2 are consumed more. This may result in decreased voltage of the electric power supplied from DC/DC converter 160 to ECU 300. In such a case, if the voltage of the electric power supplied from DC/DC converter 160 to ECU 300 is decreased to fall below the operational voltage for ECU 300, ECU 300 cannot implement the control. This may result in insufficient consumption of the residual charges in smoothing capacitors C1, C2.

In view of this, in the second embodiment, power supply unit 165A is configured to include a step-up converter instead of relay SR3 of Fig. 1, so as to supply ECU 300 with a stable control power source voltage even when the power source voltage from powder storage device 130 is interrupted due to disconnection of lines and the output voltage of DC/DC converter 160 is decreased. Now, such a configuration is described below.

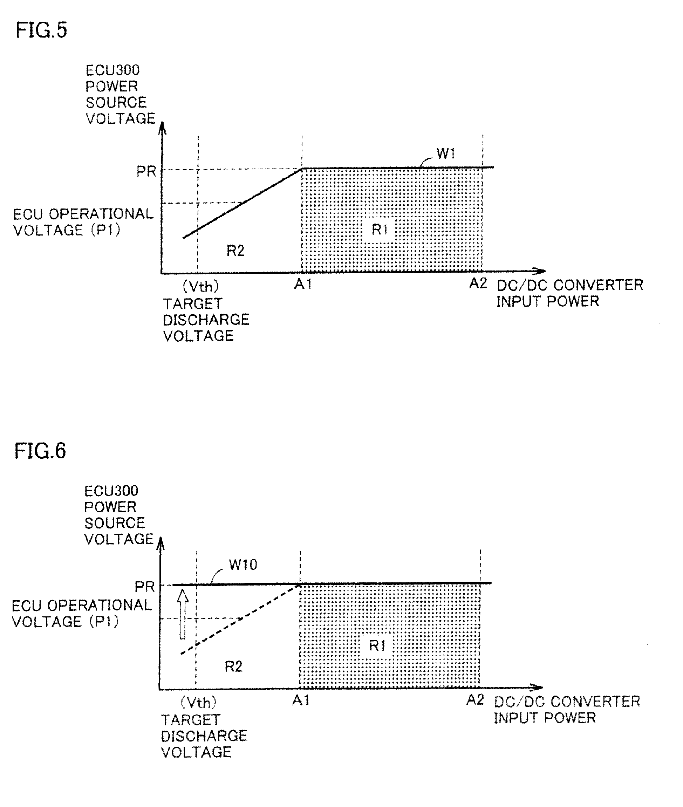

Referring to Fig. 5 and Fig. 6, the following describes outline of stabilization of the control power source voltage in the second embodiment.

Fig. 5 shows a relation between the input voltage of DC/DC converter 160 (i.e., voltage VL) and the control power source voltage supplied to ECU 300 (i.e., output voltage of DC/DC converter 160) in the case where backing-up from power storage device 130 is not attained due to disconnection of power source line PL2 and ground line NL2 in the first embodiment.

Referring to Fig. 5, a region R 1 in which the input voltage of DC/DC converter 160 falls within a range of A1 to A2 is a duty controllable range for a semiconductor switching element (not shown) in DC/DC converter 160. While it is in this region, the output voltage of DC/DC converter 160 is controlled to be a target voltage PR. However, when the input voltage is decreased from A1 to fall in a region R2, a target voltage PR cannot be output even with the duty of the semiconductor switching element in DC/DC converter 160 being set at 100%. Hence, as the input voltage of DC/DC converter 160 is decreased from A1 to become lower and lower, the output voltage of DC/DC converter 160 is decreased more.

Further, when the output voltage of DC/DC converter 160 is decreased to fall below the lower limit value of the operational voltage for the ECU (P1 in Fig. 5), ECU 300 cannot implement the control. Accordingly, even when voltage VL of smoothing capacitor C1 is not decreased to reach target discharge voltage Vth, the discharging operation cannot be performed subsequently.

Meanwhile, Fig. 6 shows a relation the input voltage of DC/DC converter 160 and the control power source voltage supplied to ECU 300 in the second embodiment.

In the second embodiment, DC/DC converted 160 is configured to include the step-up converter at its output side. With such a configuration, as indicated by W10 in Fig. 6, even when the input electric power of DC/DC converter 160 is decreased from A1 and the output voltage of DC/DC converter 160 is accordingly decreased, ECU 300 is supplied with electric power stepped up by the step-up converter. Accordingly, a voltage equal to or greater than the ECU operational voltage (PI) can be stably supplied to ECU 300. In this way, until the voltage of smoothing capacitor C1 reaches target discharge voltage Vth, ECU 300 can operate to discharge the residual charges.

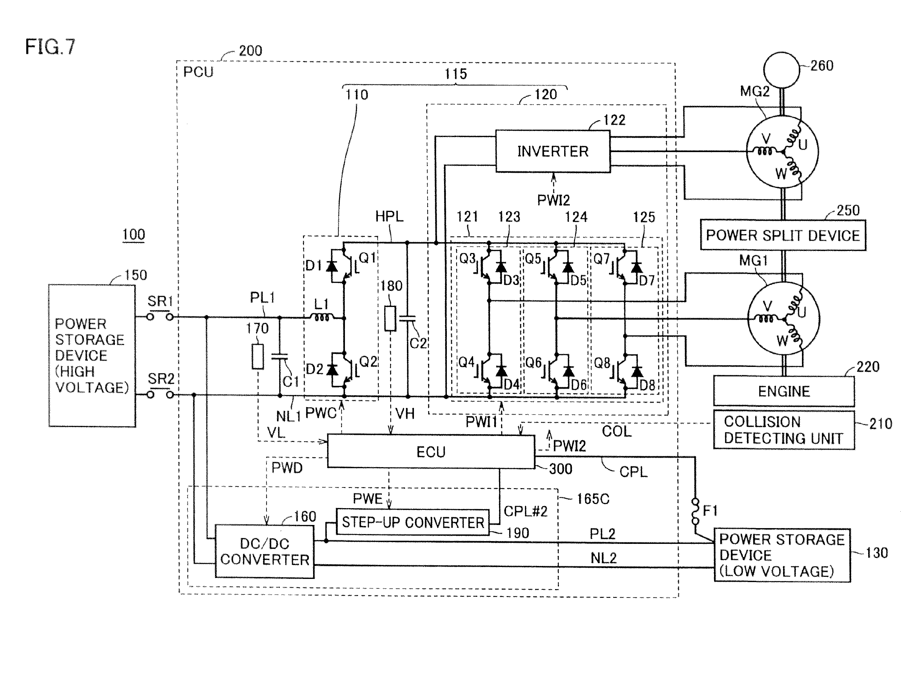

Fig. 7 shows a general block diagram of vehicle 100 in the second embodiment. In Fig. 7, power supply unit 165A of Fig. 1 is replaced with a power supply unit 165C. In power supply unit 165C, relay SR3 in power supply unit 165A of Fig. 1 is replaced with step-up converter 190. In Fig. 7, portions/units corresponding to these in Fig. 1 are not described repeatedly.

Referring to Fig. 7, step-up converter 190 is connected to power source line PL2 at the output side of DC/DC converter 160. Further, step-up converter 190 is connected to ECU 300 via a control power source line CPL#2. Step-up converter 190 is controller in accordance with a control signal PWE from ECU 300 to step up the voltage in power source line PL2 to be equal to or greater than the ECU operational voltage and supply ECU 300 with the control power source voltage.

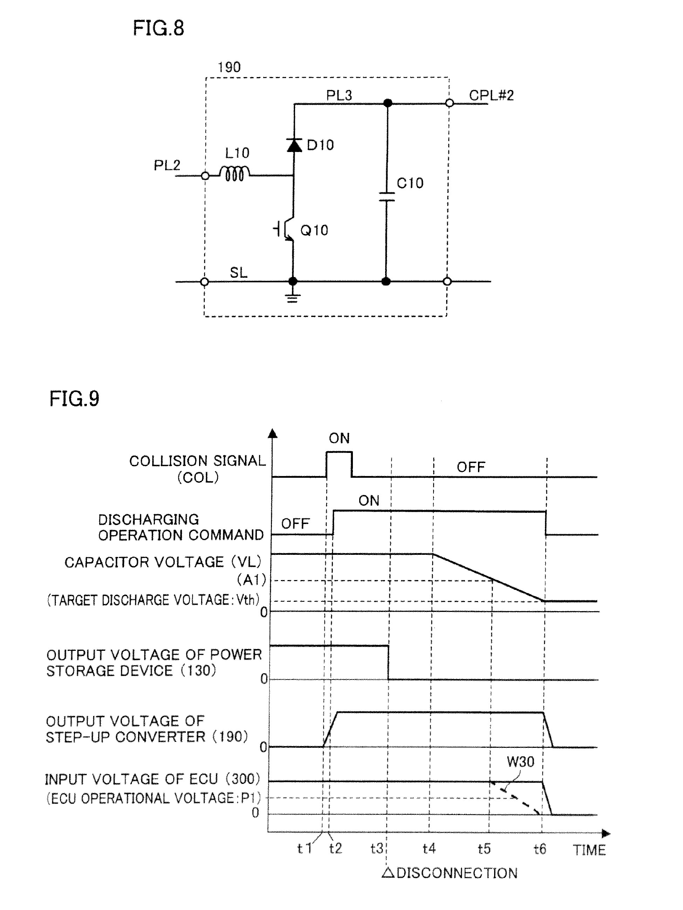

Fig. 8 shows an exemplary configuration of step-up converter 190. Step-up converter 190 is, for example, a step-up chopper of non-insulation type, and induces a reactor L10, a diode D10, a semiconductor switching element Q10, and a smoothing capacitor C10.

Diode D10 and semiconductor switching element Q10 are connected to each other in series between power source line PL3 and ground line SL. Semiconductor switching element Q10 has an emitter connected to ground line SL, and has a collector connected to diode D10, Further, diode D10 has a cathode connected to power source line PL3, and has an anode connected to the collector of semiconductor switching element Q10.

Reactor L10 has one end connected to power source line PL2, and has the other end connected to a connection node of diode D10 and semiconductor switching element Q10.

Smoothing capacitor C10 is connected between a power source line PL3 and a ground line SL, and smoothes the stepped-up voltage. Power source line PL3 is connected to control power source line CPL#2.

By controlling semiconductor switching element Q10 to be on or off by means of control signal PWE from ECU 300, the voltage in power source line PL2 is stepped up.

It should be noted that step-up converter 190 may be configured as a of insulation type including an insulated transformer instead of a converter of non-insulation type such as the one in the example of Fig. 8, but when the converter of non-insulation type is employed as in Fig. 8, the number of components can be reduced to achieve reduced cost.

Fig. 9 shows a time chart for illustrating the residual charge discharging control in the second embodiment. A horizontal axis in Fig. 9 represents time. A vertical axis therein represents collision signal COL, a discharging operation commend, voltage VL of smoothing capacitor C1, the power source voltage supplied from power storage device 130 to ECU 300, output voltage of step-up converter 190, and the power source voltage provided to ECU 300.

Referring to Fig. 7 and Fig. 9, in response to collision detecting unit 210 detecting collision of vehicle 100 at time t1, ECU 300 starts up step-up converter 190 to supply ECU 300 with the power source voltage from power source line PL2 at the output side of DC/DC converter 160.

Thereafter, when the contact paints of relays SR1, SR2 are opened, ECU 300 turns on the discharging operation command at time t2. In this way, converter 110 is controlled by ECU 300 to perform the step-up operation and the step-down operation alternately, thus starting the discharging control for the residual charges in smoothing capacitors C1, C2.

It should be noted that at this point of time, control power source line CPL, extending from power storage device 130 is not disconnected, and ECU 300 is operated using a power source voltage supplied from pon-ter storage device 130 to ECU 300 and a power source voltage supplied from step-up converter 190.

It is assumed that control power source line CPL extending from power storage device 130 is disconnected at time t3. Accordingly, the power source voltage supplied from power storage device 130 to ECU 300 is decreased to 0 V. It should be noted that there is a time difference between the collision taking place at time t1 and the disconnection of control power source line CPL taking place at time t3, due to ongoing, deformation of vehicle 100 caused by the collision.

Here, if not supplied with the power source voltage supplied from step-up converter 190, ECU 300 cannot be operated at and after time t3. Accordingly, the discharging operation for the residual charges in smoothing capacitors C1, C2 is supposed to be stopped. However, in the second embodiment, step-up converter 190 supplies the power source voltage to ECU 300. Hence, the discharging operation for the residual charges is continued.

When the discharging operation proceeds to decrease the residual charges in smoothing capacitors C1, C2, voltage VL of smoothing capacitor C1 starts to be decreased at time t4.

When voltage VL is decreased to fall below voltage A1, which is the slower limit of the duty controllable range for DC/DC converter 160, at time t5, the output voltage of DC/DC converter 160 starts to be decreased as indicated by a broken line W30 of Fig. 8. However, the output voltage thereof is stepped up by step-up converter 190 and therefore the input voltage of ECU 300 is not decreased.

Then, when the discharging operation further proceeds to decrease voltage VL to fall below target discharge voltage Vth at time t6, ECU 300 turns off the discharging operation command, thereby stopping the discharging operation. Accordingly, control signal PWE for step-up converter 190 is stopped to decrease the output voltage of step-up converter 190 to 0 V.

Fig. 10 shows a flowchart for illustrating the residual charge discharging control process performed by ECU 300 in the second embodiment. In Fig. 10, steps S430 and S470 in the flowchart of Fig. 3 are replaced with S435 and S475 respectively. In Fig. 10, the same steps as those in Fig. 3 are not described repeatedly.

When ECU 300 makes settings to disable the "low-voltage protection function" of each of converter 110 and inverter 120 in S420, the prowess proceeds to S435. In S435, ECU 300 starts up step-up converter 190 to step up the voltage of power source line PL2 to a predetermined voltage, which is then supplied to ECU 300 as the power source voltage. Then, the process proceeds to S440, thereby starting the discharging control for the residual charges.

Further, when the residual are decreased to decrease voltage VL of smoothing capacitor C1 below target discharge voltage Vth (YES in S450) and the discharging control is accordingly stopped (S460), ECU 300 stops the outputting of control signal PWE at S475, thereby stopping step-up converter 190. Then, the process is brought back to the main routine.

With the configuration described above, ECU 300 is supplied with stable control power source voltage even if the control power source voltage from power storage device 130 is interrupted due to disconnection of a line and the output voltage of DC/DC converter 160 is decreased by decreasing voltage VL of smoothing capacitor C1 as a result of discharging the residual charges. Accordingly, even in the event of collision of vehicle 100, the residual charges in smoothing capacitors C1, C2 can be securely discharged.

It should be noted that in the second embodiment, as with the variation of the first embodiment, as the power source voltage to be supplied to step-up converter 190, there can be employed the control power source voltage generated by DC/DC converter 160 and independent of power source line PL2.

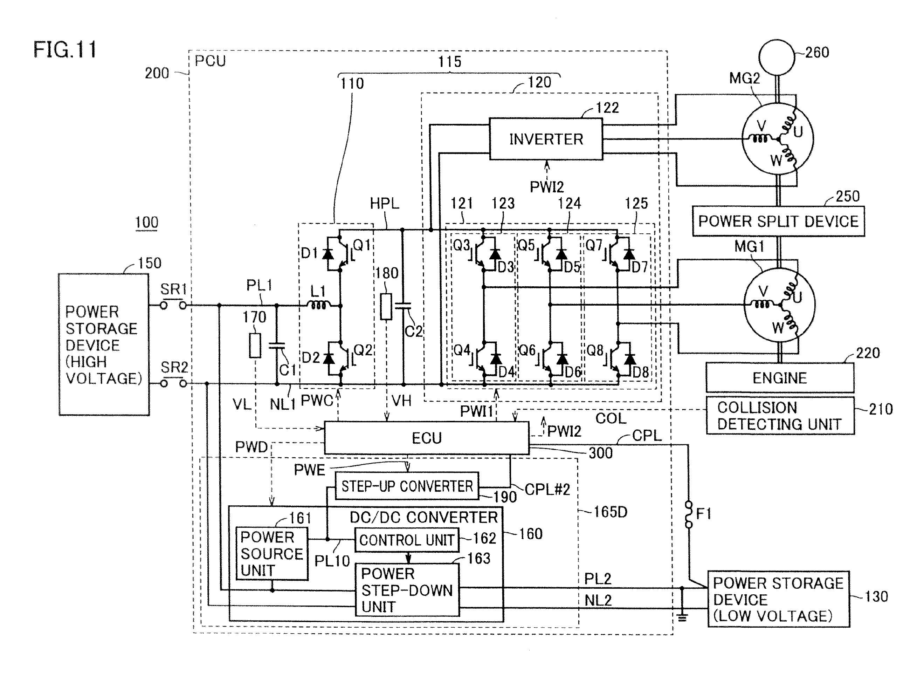

Fig. 11 shows a general block diagram of vehicle 100 in which the variation of the first embodiment is applied to the second embodiment. In Fig. 11, power supply unit 165B in the general block diagram of Fig. 4 is replaced with a power supply unit 165D. Power supply unit 165D is configured such that relay SR3 of power supply unit 165B of Fig. 4 is replaced with a step-up converter 190. In Fig. 11, portions/units corresponding to those in Fig. 1, Fig. 4, and Fig. 7 are not described repeatedly.

Referring to Fig. 11, DC/DC converter 160 includes a power source unit 161, a control unit 162, and a power step-down unit 163.

Step-up converter 190 has its input side connected to a power source line PL10 connected to the output side of power source unit 161 of DC/DC converter 160, and has its output side connected to the power receiving unit of ECU 300. Then, the voltage of power source line PL10 is stepped up to supply ECU 300 with the control power source voltage.

Also in such a circuit configuration, the residual charge discharging control can be performed by ECU 300 implementing the control in accordance with the process illustrated in Fig. 10.

With the configuration described above, DC/DC converter 160 includes: power step-down unit 163 having, for example, an insulated transformer to insulate power source line PL1 at the input side and power source line PL2 at the output side from each pother; and power source unit 161 configured to generate, from power source line PL1, the control power source voltage to be supplied to control unit 162 that controls power step-down unit 163 as described in the first embodiment. The power source voltage for step-up converter 190 is supplied using the output power of power source unit, 161. In this way, even if power source line PL2 connecting DC/DC converter 160 and power storage device 130 to each other is grounded in the event of collision of vehicle 100, ECU 300 is supplied with the stable power source voltage using the electric powder accumulated in smoothing capacitors C1, C2. Hence, the residual charges in smoothing capacitors C1, C2 can be securely discharged in the event of collision of vehicle 100.

It should be noted that ECU 300 of the present embodiment is one example of the "control device" of the present invention. It should be also noted that DC/DC converter 160, step-up converter 190, and converter 110 are respectively examples of "first voltage converter", "second voltage converter", and "third voltage converter" in the present invention.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

100: vehicle; 110: converter; 115: power converting unit; 120, 121, 122: inverter; 123: V-phase arm; 124: U-phase arm; 125: W-phase arm; 130, 150: power storage device; 160: DC/DC converter; 161: power source unit; 162: control unit; 163: power step-down unit; 165A, 1658, 165C, 165D: power supply unit; 170, 180: voltage sensor; 190: step-up converter; 200: PCU; 210: collision detecting unit; 220: engine; 250: power split device; 260: driving wheel; 300: ECU; 310: control unit; 320: power receiving unit; C1. C2, C10: smoothing capacitor; CPL, CPL,#1, CPL#2: control power source line; D1-D8, D10: diode; F1: fuse; HPL, PL1, PL2. PL10: power source line; L1, L10: reactor; MG1, MG2: motor generator; NL1, NL2, SL: ground line; NL2: aground line; Q1-Q8, Q10: semiconductor switching element; SR1, SR2, SR3: relay

## Claims

1. A power converting apparatus (200) for a vehicle (100),
the vehicle (100) including
a first power storage device (150) for supplying direct-current power to the power converting apparatus (200),
a relay (SR1, SR2) configured to be capable of switching between supply and interruption of the direct-current power to the power converting apparatus (200), and
a collision detecting unit (210) for detecting collision of the vehicle (100), the power converting apparatus (200) comprising:
a capacitor (C1, C2);
a power converting unit (115) configured to include a switching element (Q1-Q8) and convert the power supplied from said first power storage device (150) via said relay (SR1, SR2);
a control device (300) for controlling said power converting unit (115) by controlling said switching element (Q1-Q8), so as to consume a residual charge in said capacitor (C1, C2); and
a power supply unit (165A, 165B, 165C, 165D) for supplying said control device (300) with a power source voltage using power accumulated in said capacitor (C1, C2), when the collision of the vehicle (100) is detected and said residual charge is consumed with said first power storage device (150) being electrically separated from the powder converting apparatus (200) by said relay (SR1, SR2).

2. The power converting apparatus for the vehicle according to claim 1, wherein:
said power supply unit (165A, 165C) includes a first voltage converter (160) for stepping down a voltage of the power accumulated in said capacitor (C1 C2), and
when the collision of the vehicle (100) is detected, said first voltage converter (160) supplies said control device (300) with the power source voltage.

3. The power converting apparatus for the vehicle according to claim 2, wherein:
said power supply unit (165A) further includes a switch (SR3) connected to a power source line (PL2) and said control device (300) and configured to be capable oaf switching between supply and interruption of the power source voltage from said first voltage converted (160) to said control device (300), said power source line (PL2) being supplied with the power stepped down by said first voltage converter (160), and
in response to the detection of the collision of the vehicle (100), sand control device (300) controls said switch (SR3) to supply the power source voltage from said first voltage converter (160) to said control device (300).

4. The power converting apparatus for the vehicle according to claim 2, wherein:
said power supply unit (165C) further includes a second voltage converter (190) for stepping up the power stepped down by said first voltage converter (160), and
when the collision of the vehicle (100) is detected, said second voltage converter (190) supplies said control device (300) with the power source voltage.

5. The power converting apparatus for the vehicle according to claim 2, wherein:
the vehicle (100) further includes a second power storage device (130), and
said first voltage converter (160) is a step-down converter for charging said second power storage device (130).

6. The power converting apparatus for the vehicle according to claim 1, wherein:
said power supply unit (165B, 165D) includes a first voltage converter (160) for stepping down a voltage of the power accumulated in said capacitor (C1, C2),
said first voltage converter (160) includes
a control unit (162), and
a power source unit (161) for generating a control power source voltage for operating said control unit (162),
said power source unit (161) generates said control power source voltage by converting the power accumulated in said capacitor (C 1, C2), and
when the collision of the vehicle (100) is detected, said power supply unit (165B, 165D) supplies said control device (300) with said control power source voltage.

7. The power converting apparatus for the vehicle according to claim 6, wherein:
said power supply unit (165D) further includes a second voltage converter (190) for stepping up said control power source voltage, said second voltage converter (190) being connected to a power source line (PL10) supplied with said control power source voltage from said power source unit (161), and
when the collision of the vehicle (100) is detected, said second voltage converter (190) supplies said control device (300) with said power source voltage.

8. The power converting apparatus for the vehicle according to claim 1, wherein:
said power converting unit (115) includes
a third voltage converter (110) configured to perform voltage conversion of the direct-current power supplied from said first power storage device (150), and
an inverter (120) for converting the direct-current power supplied from said third voltage converter (110), into alternating-current power,
said capacitor (C1, C2) includes
a first capacitor (C1) connected to said third voltage converter at the first power storage device (150) side, and
a second capacitor (C2) connected to said third voltage converter at the inverter (120) side.

9. The power converting apparatus for the vehicle according to claim 8,
wherein said third voltage converter (110) is capable of performing a step-up operation and a step-down operation, said step-up operation allows for consumption of a part of the residual charge in said first capacitor (C1), and said step-down operation allows for consumption of a part of the residual charge in said second capacitor (C2).

10. The power converting apparatus for the vehicle according to claim 9,
wherein said control device (300) controls said third voltage converter (110) to repeat said step-up operation and said step-down operation alternately.

11. A vehicle (100) comprising:
a power converting apparatus (200);
a first power storage device (150) for supplying direct-current power to the power converting apparatus (200);
a relay (SR1, SR2) configured to be capable of switching supply and interruption of the direct-current power to the power converting apparatus (200); and
a collision detecting unit (210) for detecting collision of the vehicle (100),
the power converting apparatus (200) including
a capacitor (C1, C2),
a power converting unit (115) configured to have a switching element (Q1-Q8) and convert the power supplied from said first power storage device (150) via said relay (SR1, SR2);
a control device (300) for controlling said power converting unit (115) by controlling said switching element (Q1-Q8), so as to consume a residual charge in said capacitor (C1, C2); and
a power supply unit (165A, 165B, 165C, 165D) for supplying said control device (300) with a power source voltage using power accumulated in said capacitor (C1, C2), when the collision of the vehicle (100) is detected and said residual charge is consumed with said first power storage device (150) being electrically separated from the power converting apparatus (200) by said relay (SR1, SR2).

12. The vehicle according to claim 11, wherein:
said power supply unit (165A, 165C) includes a first voltage converter (160) for stepping down a voltage of the power accumulated in said capacitor (C1, C2), and
when the collision of the vehicle (100) is detected, said first voltage converter (160) supplies said control device (300) with the power source voltage.

13. The vehicle according to claim 12, wherein:
said power supply unit (165A) further includes a switch (SR3) connected to a power source line (PL2) and said control device (300) and configured to be capable of switching between supply and interruption of the power source voltage from said first voltage converter (160) to said control device (300), said power source line (PL2) being supplied with the power stepped down by said first voltage converter (160), and
in response to the detection of the collision of the vehicle (100), said control device (300) controls said switch (SR3) to supply the power source voltage from said first voltage converter (160) to said control device (300).

14. The vehicle according to claim 12, wherein:
said power supply unit (165C) further includes a second voltage converter (190) for stepping up the power stepped down by said first voltage converter (160), and
when the collision of the vehicle (100) is detected, said second voltage converter (190) supplies said control device (300) with the power source voltage.

15. The vehicle according to claim 11, wherein:
said power supply unit (165D) includes a first voltage converter (160) for stepping down a voltage of the power accumulated in said capacitor (C1, C2),
said first voltage converter (160) includes
a control unit (162), and
a power source unit (161) for generating a control power source voltage for operating said control unit (162),
said power source unit (161) generates said control power source voltage by converting the power accumulated in said capacitor (C1, C2), and
said power supply unit (165D) further includes a second voltage converter (190) for stepping up said control power source voltage to supply said control device (300) with said power source voltage when the collision of the vehicle (100) is detected.
